# EUROPEAN PATENT APPLICATION

(11) **EP 4 290 715 A1**
(43) Date of publication of application: **13.12.2023**
(21) Application number: 22178445.7
(22) Date of filing: 10.06.2022
(51) Int. Cl.: H02G 5/06, H01B 3/47

(54) **INSULATOR SPACER FOR AN INSULATOR OF A HIGH OR MEDIUM VOLTAGE DEVICE AND METHOD FOR PRODUCING THE SAME**

(71) Applicant: Hitachi Energy Ltd, 8050 Zürich (CH)
(72) Inventor: Zanetti, Alberto, 8050 Zurich (CH); Platek, Robert, 32-400 Myslenice (PL)
(74) Representative: Michalski Hüttermann & Partner Patentanwälte mbB

(57) **Abstract**

The invention relates to an insulator spacer (12) for an insulator (10) of a high or medium voltage device, wherein the insulator spacer (12) comprises a core structure (20) and a shell structure (22), wherein the core structure (20) is at least partly covered by the shell structure (22), wherein the core structure (20) consists of a first material comprising a thermoplastic, and wherein the shell structure (22) consists of a second material comprising a thermoplastic, and wherein an interface (24) is formed between the core structure (20) and the shell structure (22).

Furthermore, the invention relates to an insulator (10) for a high or medium voltage device comprising the above insulator spacer (12) and a conductive insert (14) arranged in a central opening of the insulator spacer (12).

Furthermore, the invention relates to a gas insulated high or medium voltage device comprising the above insulator (10).

Further, the invention relates to a method for producing the above insulator spacer (12).

## Description

### Technical Field

The invention relates to an insulator spacer for an insulator of a high or medium voltage device.

Furthermore, the invention relates to an insulator for a high or medium voltage device comprising the above insulator spacer and further to a gas insulated high or medium voltage device comprising said insulator.

Furthermore, the invention relates to a method for producing the above insulator spacer.

### Background Art

High or medium voltage devices, such as circuit breakers and switchgears are essential for the protection of technical equipment, especially in the high voltage range. For example, circuit breakers are predominantly used for interrupting a current, when an electrical fault occurs. As an example, circuit breakers have the task of opening arcing contacts, quench an arc, and keeping the arcing contacts apart from one another in order to avoid a current flow even in case of high electrical potential originating from the electrical fault itself. Circuit breakers, may break medium to high short circuit currents of typically 1 kA to 80 kA at medium to high voltages of 12 kV to 72 kV and up to 1200 kV. Thus, high or medium voltage devices accommodate high-voltage conductors such as lead conductors to which a high voltage is applied.

Some high or medium voltage devices, namely gas-insulated switchgears (GIS), comprise an insulation gas within an enclosure, for example hexafluoride (SF₆), de-cafluoro-2-methylbutan-3-one (C5-FK), and/or heptafluoro-2-methylpropanenitrile (C4-FN) in order to shield and insulate the high-voltage conductor from other component and/or to improve quenching of an arc, when operating arcing contacts.

In order to hold the high-voltage conductor firmly inside the device volume, in a position sufficiently far away from the grounded enclosure, an insulator is provided inside the gas enclosure. The insulator may be secured at its outer rim to the enclosure, and may be configured to accommodate the high-voltage conductor within the enclosure. The main portion of the insulator is an insulator spacer, which may have a central opening for a metal insert to provide electrical connection to the conductor. The insulator spacer may be configured to be firmly attached to the enclosure, for example by a flange.

The insulator may need to keep a required pressure between compartments of the gas-insulated high voltage device and/or may need to contain the insulation gas within the device volume. In order to reach the required gas tightness, it is advantageous if the surfaces of the insulator spacer at the connection of the insulator spacer and the enclosure have a good quality, in particular a high glossiness and/or a low roughness. Furthermore, the insulator may need to withstand the high electrical fields within the high or medium voltage device and/or the high pressures within the high or medium voltage device.

For a long time, alumina filled epoxy has been used as basic material for the manufacturing of insulator spacers in GIS. Epoxy is a material, which has good electrical insulating properties and mechanical strength but has also disadvantages. Epoxy is not environment friendly and the manufacturing process is complicated, time consuming and therefore also relatively costly. An additional disadvantage of the epoxy insulators is the material's inherent brittleness. This brittleness may lead to an unwanted sudden failure of the insulator if loaded too high and therefore needs to be controlled closely to ensure proper part function.

Furthermore, the use of insulation gases that are more environmentally friendly than SF₆ in gas-insulated high or medium voltage devices is accompanied with a need for more reliable and robust insulators. For example, a pressure of insulation gases having a reduced SF₆ content or of insulation gases that are even free of SF₆ is generally higher in the enclosure of the high or medium voltage device. This increase in the nominal pressure of the insulation gas also increases the requirements for the mechanical stability of the insulator.

Furthermore, insulation gases having a reduced SF₆ content or insulation gases that are even free of SF₆ have a higher sensitivity towards contamination particles, that may have intruded the gas-insulated enclosure of the high or medium voltage device or have been generated by wear debris of components of the high or medium voltage device within the enclosure. Contaminant particles may lead to floating potential variation and may negatively affect the performance of the insulation gas. Thus, the higher sensitivity of the insulation gas towards contaminant particles also increases the requirements for the dielectric strength of the insulator.

WO 2013/030386 A1 describes an insulator for a gas-insulated voltage device, wherein the insulator is made out of a thermoplastic material. Such an insulator has the advantage that it is less brittle than an insulator made of epoxy. However, there is still a need to improve the mechanical and/or dielectric performances of the insulator and/or the gas.

### Summary of invention

It is an object of the invention to provide means to improve the reliability, robustness and/or gas tightness of gas-insulated high or medium voltage devices. It is further an object of the present invention to improve the reliability and robustness of insulators and/or insulator spacers, to enhance the mechanical properties of the insulator and/or the insulator spacer, and/or to enhance the dielectric performance of the insulator and/or the insulator spacer.

The object of the invention is solved by the features of the independent claims. Modified embodiments are detailed in the dependent claims.

Thus, the object is solved by an insulator spacer for an insulator of a high or medium voltage device, wherein the insulator spacer comprises a core structure and a shell structure, wherein the core structure is at least partly covered by the shell structure, wherein the core structure consists of a first material comprising a thermoplastic, and wherein the shell structure consists of a second material comprising a thermoplastic, and wherein an interface is formed between the core structure and the shell structure.

Furthermore, the object is solved by an insulator for a high or medium voltage device comprising the above insulator spacer and a conductive insert arranged in a central opening of the insulator spacer.

Furthermore, the object is solved by a gas insulated high or medium voltage device comprising the above insulator and an insulation gas. Preferably, the insulation gas comprises CO₂, SF₆, mixtures of SF₆ with a carrier gas and/or mixtures of fluoroketons and/or fluoronitriles with a carrier gas.

Furthermore, the object is solved by a method for producing an insulator spacer of an insulator for a high or medium voltage device, comprising the step of combining at least a first material comprising a thermoplastic and a second material comprising a thermoplastic into an insulator spacer by multi material injection molding, such that an insulator spacer comprising a core structure consisting of the first material, a shell structure partly covering the core structure and consisting of the second material, and an interface between the core structure and the shell structure is formed.

One aspect of the invention is that the insulator spacer comprises the core structure and the shell structure, wherein the core structure consists of the first material comprising a thermoplastic, wherein the shell structure consists of a second material comprising a thermoplastic, and wherein the interface is formed between the core structure and the shell structure. In other words, the insulator is preferably not an entirely homogenous thermoplastic part, but comprises the core structure and the shell structure. This allows to specifically tailor the mechanical and/or dielectric properties of the insulator spacer and/or the surface quality of the insulator spacer for example by choosing the first material - i.e. the core material - different to the second material - i.e. the shell material.

However, even in case the first material is not chosen different to the second material, the mechanical properties of the insulator spacer are influenced by the core structure, the shell structure and the interface between them, as the interface and the interfacial behaviour is fundamental to the bulk properties of the insulator spacer. For example, the interface influences crack propagation and/or mechanical strength of the insulator spacer. Furthermore, the insulator spacer having the core structure and the shell structure also allows to manufacture insulator spacers having higher thicknesses, while avoiding manufacturing imperfections like voids, deformations and/or burns. Thus the mechanical stability of the insulator is increased.

The core structure of the insulator spacer is at least partly covered by the shell structure. At the interface of the core structure and the shell structure, the core structure and the shell structure are preferably joint together. As the core structure and the shell structure both consist of a material comprising a thermoplastic, the interface is a polymer interface. The interphase may have different local physical properties as a region within the core structure and/or a region within the shell structure. This may even be the case for situations where the first material is the same as the second material. For example, the local density at the interface may be different from a density within the core and/or shell structure. Even though the insulator spacer comprises the core structure, the shell structure and the interface, the insulator spacer is preferably an integrated component, as the interface ensures a tight connection between the core structure and the shell structure. The interface between the core structure and the shell structure preferably ranges in its thickness from nanometres to several millimetres. Preferably, the thickness of the interface ranges from about 20 nm to about 5 mm, preferably about 200 nm to about 3 mm, more preferably about 1 µm to about 1 mm .

A thermoplastic, also called thermosoft plastic, is a plastic polymer material that becomes pliable or moldable at a certain elevated temperature and solidifies upon cooling. Above a glass transition temperature (T_{g}) and below a melting temperature (Tₘ) of the thermoplastic, the physical properties of a thermoplastic change drastically without an associated phase change. The first material and/or the second material can consist of a mixture of different thermoplastics. Alternatively, the first material and/or the second material can comprise in addition to the thermoplastic or to the mixture of thermoplastics additional components, for example fillers.

Further preferably the presence of the interface between the core structure and the shell structure may be determined by visual inspection and/or by inspection with an optical microscope, preferably by inspection of a surface orthogonal to a boundary surface between the core structure and the shell structure comprising the interface. Further preferably, and depending on the thickness of the interface, the presence of the interface may be determined by X-ray reflectometry, neutron reflectometry, and/or direct imaging by electron microscopic techniques.

The core structure is at least partly covered by the shell structure. Hence, it is possible that a surface of the insulator spacer is formed by the core structure and by the shell structure. However, it is also possible that the core structure is entirely covered by the shell structure. In this case the surface of the insulator spacer may be exclusively formed by the shell structure.

According to a preferred embodiment of the invention the insulator spacer is produced by multi-material injection molding, preferably by multi-shot injection molding, multi component injection molding, and/or overmolding.

Multi-material injection molding is the process of molding two or more materials into one plastic part - i.e. the insulator spacer. As is the case in traditional injection molding, multi material injection molding preferably uses materials that are at or near their melting point so that the semi-liquidous and/or viscous material can fill voids and cavities within a pre-machined mold, thus taking on the desired shape of the insulator spacer. Preferably, the first material is used in the multi-material injection molding process of the insulator spacer to form the core structure of the insulator spacer and the second material is used in the multi-material injection molding process of the insulator spacer to form the shell structure of the insulator spacer.

Several different ways of multi-material injection molding can be used to produce the insulator spacer. Preferably, a process is used where the first and the second material are molded into one insulator spacer during the same molding cycle.

Preferably, multi-component injection molding is used, where the first and the second material are preferably injected simultaneously, as opposed to injecting the first and the second material sequentially one after another, such that one material is placed as an additional layer on top of each other.

Further preferably, the insulator spacer is produced by multi-shot injection molding also called multi material overmolding. For multi-shot injection molding, preferably a multi-shot molding machine is used. The multi-shot molding machine is preferably equipped with several barrels, allowing to use the first material and the second material to be shot into the same mold during the same molding cycle. Further preferably the multi-shot molding machine comprising several different molds, preferably depending on the number of injectors being used. At each step in the multi-shot injection molding process, material is added into a mold, and once it starts cooling, it is preferably automatically moved to the next mold, for a further shot of material. This creates a layering effect between materials while maintaining relatively high-energy interactions at material boundaries.

Another possibility to produce the insulator spacer is to use insert molding. In insert molding, the core structure is preferably produced by injection molding of the first material with a conventional single shot injection molding machine. The core structure is then preferably placed into an overmolding tool in order to be coated with the second material thus forming the interface and the shell structure.

According to another preferred embodiment of the invention, an insulator spacer is provided, wherein the first material and/or the second material are free of a thermoset epoxy. Insulator spacers made of epoxy have the disadvantage that their production is not environmentally friendly and furthermore, that the insulator spacer is brittle. Thus, the absence of epoxy makes the insulator spacer environmentally friendly and increases the reliability of the insulator spacer under use conditions.

As already mentioned, according to a preferred embodiment an insulator is provided wherein the first material - also called core material - is different to the second material - also called shell material. This has the advantage that materials with different tailored properties can be used. The first material and/or the second material can be a single component material - i.e. a material consisting of one type of chemical compound - or a multi-component material - i.e. a material consisting of a mixture of at least two chemical compounds, e.g. a mixture of different thermoplastics and/or a mixture of a thermoplastic and a filler. In the context of this application a material is considered different to another material if the amounts of the chemical compounds are different and/or if the chemical structure of the chemical compound is different.

For example, the core material can be a mixture of 50 vol-% poly(oxy-1,4-phenylsulfonyl-1,4-phenyl), or in short also called PES and 50 vol-% glass fibers. The shell material can also be a mixture of PES and glass fibers, however with 80 vol-% PES and 20 vol-% glass fibers. As the amounts of the glass fibers in the first and the second material are different to each other, the first and the second material are considered to be different materials.

According to an alternative preferred embodiment an insulator spacer is provided wherein the first material and the second material are the same. In the context of this application a material is considered the same to another material if the amounts of the chemical compounds are the same and the chemical structure of the chemical compound is the same. In particular the chemical structure includes the distinct arrangement of the atoms in space. In other words, in the context of this application two constitutional isomers, two diastereomers, two enantiomers and/or two *cis*/*trans* isomers of a chemical compound are considered different materials.

According to another preferred embodiment of the invention, the first material and/or the second material preferably comprise in addition to the thermoplastic a filler, preferably a fiber. Preferably, the addition of a filler enhances the mechanical performance of the insulator spacer. The filler can be a particle or a fiber. Particles preferably have an essentially spherical shape, i.e. their diameter is in all directions of space the same ± 50%. Fibers preferably have a shape that is significantly longer in one direction than it is wide. Preferably, the length of the fiber is at least 5 times as long as the diameter of the fiber.

According to another preferred embodiment, the filler is selected from silica, carbon, mica, calcium carbonate, kaolin, talc, wollastonite, sepiolite, potassium titanate, ceramic, alumina, calcium silicate, rock wool, glass, glass fibers, aramid, basalt, carbon, carbon fibers, polyethylene, polyamide, polyimide, polyester, polyvinyl alcohol, polyvinylidene chloride, polyacrylonitrile, polyurethane, polyalkylene paraoxybenzoate, phenol type, wool, silk, cotton, rayon, cellulose acetate, flax, ramie, and/or jute. Further preferably, the first material and/or the second material of the insulator spacer is a fiber reinforced thermoplastic. The mechanical properties of the insulator spacer can be improved by the addition of fibers. Further preferably, the fiber has a diameter ≥ 5 µm to ≤ 50 µm and/or a length ≥ 10 µm to ≤ 20 mm. Further preferably the length of the fiber is ≤ 1 mm. Alternatively, the length of the fiber is ≥ 2 mm. The fibers is preferably glass fibers, aramid fibers, carbon fibers, polyethylene fibers and/or basalt fibers. Particular preferred are glass fibers.

According to another preferred embodiment of the invention an insulator spacer is provided, wherein a filler content of the first material is the same as a filler content of the second material. This is particular preferred in cases where the filler is a particle. According to another preferred embodiment of the invention an insulator spacer is provided, wherein a filler content of the first material is higher than a filler content of the second material. This is particular preferred in cases where the filler is a fiber. Having a higher filler content in the first material than in the second material has the advantage that the core structure has a high mechanical stability, giving the insulator spacer sufficient mechanical strength, while the lower filler content in the shell structure provides a surface to the insulator spacer having a low surface roughness and/or high glossiness, thus ensuring a high gas tightness. Further preferably, the filler content of the first material is at least 150 %, more preferably at least 200 %, and even more preferably at least 500 % of the filler content of the second material, taking the filler content of the second material as 100 %.

The first material can be free of a filler. Alternatively and according to another preferred embodiment of the invention, the filler content of the first material - i.e. the core material - is > 0 vol%, more preferably ≥ 10 vol%, even more preferably ≥ 20 vol%, and/or the filler content of the first material is ≤ 70 vol%, more preferably ≤ 60 vol%, even more preferably ≤ 50 vol%. These amounts of fillers have been shown to give good mechanical properties to the insulator spacer.

According to another preferred embodiment of the invention the filler content of the second material - i.e. the shell material - is ≤ 30 vol%, more preferably ≤ 20 vol%, even more preferably ≤ 10 vol%. Further preferably the second material is free of a filler. These amounts of filler ensure high surface qualities, with regard to surface roughness, and glossiness. Furthermore, the amounts of filler also allow to provide an insulator spacer having a good dielectric performance. With the low amount of filler - or even the absence of filler - in the shell material, the risk of a negative reaction of the shell material with insulating gases like SF₆ or similar decreases, thus rendering the insulator spacer reliable and robust.

As already mentioned, the first material comprises a thermoplastic, and the second material comprises a thermoplastic. In this regard and according to a preferred embodiment of the invention, a repeat unit of the thermoplastic of the first material is the same as the repeat unit of the thermoplastic of the second material. The repeat unit is a part of a polymer whose repetition would produce the complete polymer chain. As the thermoplastic of the first material has the same repeat unit as the thermoplastic of the second material, a high compatibility between the first material and the second material is ensured. This leads to an interface providing a tight connection between the core structure and the shell structure. Particular preferably the thermoplastic of the first material and the thermoplastic of the second have the same degree of polymerization ± 20 %. In the context of this invention the degree of polymerization is defined as the number-average molecular weight of the thermoplastic divided by the molecular weight of the monomer unit of the thermoplastic. The monomer unit of the thermoplastic may not be the same as the repeat unit of the thermoplastic, for example in cases of copolymers. In other words, the polymer chains of the thermoplastic of the first material and the thermoplastic of the second material have preferably a comparable length distribution. This leads to a particular tight interface between the core structure and the shell structure and enhances the mechanical performance of the insulator spacer.

According to another preferred embodiment of the invention the thermoplastic of the first material and/or the second material is selected from polysulfones, in particular polyethersulfone (PES or PESU) polyesters (e.g. polyethylene terephthalate (PET), polybutylene terephthalate (PBT)), polyamide (PA), polyetherimide (PEI), polyphenylene sulfide (PPS), polyether ether ketone (PEEK), polyphthalamide (PPA), polypropylene (PP), polyoxymethylene (POM), phenol formaldehyd (PF), unsatured polyester (UP), and/or polyurethane (PUR and PU).

Polysulfones are a family of high-performance thermoplastics and contain an aryl-SO₂-aryl subunit. Preferably the thermoplastic of the first material and/or the thermoplastic of the second material is selected from poly[oxy-1 ,4-phenylensulfonyl-1 ,4-phenylenoxy-1,4-phenylen(1-methylethyliden)-1,4-phenylen], in short called PSF, poly(oxy-1,4-phenylsulfonyl-1,4-phenyl), in short called PES or PESU, and/or poly(oxy-1,4-phenylenesulfonyl-1,4-phenylene), in short called PSU. Particular preferably the thermoplastic of the first material and/or the thermoplastic of the second material is poly(oxy-1,4-phenylsulfonyl-1,4-phenyl), or in short also called PES or PESU.

Further preferably the thermoplastic of the first material and/or the thermoplastic of the second material is selected from polybutylene terephthalate (PBT) and/or polyphenylene sulfide (PPS).

Even more preferably the first material and/or the second material comprise a mixture of a polysulfone and glass fibers, or a mixture of PBT and glass fibers, or a mixture of PPS and glass fibers. Further preferably the first material and/or the second material consists of a mixture essentially consisting of one or several polysulfones and glass fibers. Further preferably the first material and/or the second material consists of a mixture essentially consisting of PBT and glass fibers. Further preferably the first material and/or the second material consists of a mixture essentially consisting of PPS and glass fibers. Further preferably the first material and/or the second material consists of a mixture essentially consisting of PESU and glass fibers.

Preferably the first material consists of a mixture essentially consisting of one or several polysulfones and glass fibers, wherein the mixture comprises > 0 vol-% to ≤ 70 vol-% glass fiber, preferably ≥ 10 vol-% to ≤ 60 vol-% glass fibers and even more preferably ≥ 20 vol-% to ≤ 50 vol-% glass fibers, based on the volume of the mixture.

Even more preferably the first material consists of a mixture essentially consisting of PESU and glass fibers, wherein the mixture comprises > 0 vol-% to ≤ 70 vol-% glass fiber, preferably ≥ 10 vol-% to ≤ 60 vol-% glass fibers and even more preferably ≥ 20 vol-% to ≤ 60 vol-% glass fibers, based on the volume of the mixture.

Further preferably the first material consists of a mixture essentially consisting of PBT and glass fibers, wherein the mixture comprises > 0 vol-% to ≤ 70 vol-% glass fiber, preferably ≥ 10 vol-% to ≤ 60 vol-% glass fibers and even more preferably ≥ 20 vol-% to ≤ 60 vol-% glass fibers, based on the volume of the mixture.

Further preferably the first material consists of a mixture essentially consisting of PPS and glass fibers, wherein the mixture comprises > 0 vol-% to ≤ 70 vol-% glass fiber, preferably ≥ 10 vol-% to ≤ 60 vol-% glass fibers and even more preferably ≥ 20 vol-% to ≤ 60 vol-% glass fibers, based on the volume of the mixture.

Alternatively, the first material preferably consists of one or several polysulfones, even more preferably the first material consists of PESU, or of PBT or of PPS. Further preferably, the first material preferably consists of a thermoplastic, or a mixture of thermoplastics, and/or is free of a filler.

Further preferably the second material consists of a mixture essentially consisting of one or several polysulfones and glass fibers, wherein the mixture comprises ≤ 30 vol-% glass fiber, preferably ≤ 20 vol-% glass fiber and even more preferably ≤ 10 vol-% glass fiber, based on the volume of the mixture. Further preferably the second material consists of one or several polysulfones.

Further preferably the second material consists of a mixture essentially consisting of PESU and glass fibers, wherein the mixture comprises ≤ 30 vol-% glass fiber, preferably ≤ 20 vol-% glass fiber and even more preferably ≤ 10 vol-% glass fiber, based on the volume of the mixture.

Further preferably the second material consists of a mixture essentially consisting of PBT and glass fibers, wherein the mixture comprises ≤ 30 vol-% glass fiber, preferably ≤ 20 vol-% glass fiber and even more preferably ≤ 10 vol-% glass fiber, based on the volume of the mixture.

Further preferably the second material consists of a mixture essentially consisting of PPS and glass fibers, wherein the mixture comprises ≤ 30 vol-% glass fiber, preferably ≤ 20 vol-% glass fiber and even more preferably ≤ 10 vol-% glass fiber, based on the volume of the mixture.

Further preferably the second material consists of one or several polysulfones, and preferably consists of PESU, or of PBT or of PPS. Further preferably, the second material preferably consists of a thermoplastic, or a mixture of thermoplastics, and/or is free of a filler.

As already mentioned, the insulator spacer comprising the core structure, the shell structure, and the interface also allows to manufacture insulator spacers having a higher thickness with high manufacturing quality. In this regard and according to another preferred embodiment of the invention the insulator spacer comprises a structural element and wherein the structural element has a thickness ≥ 6 mm, preferably ≥ 12 mm, and even more preferably ≥ 18 mm. The structural element can in principle be any element of the insulator spacer, for example a rib of the insulator spacer. Preferably the structural element is a circular body of the insulator spacer, wherein the body has a first circular face and opposite to the first face a second circular face, and the thickness is the shortest distance between the first face and the second face.

The core structure and the shell structure can take up different amount of the volume of the entire insulator spacer. In this regard preferably an insulator spacer is provided, wherein the core structure has a volume corresponding to ≥ 10 %, preferably ≥ 20 % and more preferably ≥ 30 % of the entire volume of the insulator spacer. Further preferably, the core structure has a volume corresponding to ≤ 90 %, preferably ≤ 80 % and more preferably ≤ 70 % of the entire volume of the insulator spacer.

Further preferably, an insulator spacer is provided, wherein the shell structure has a volume corresponding to ≥ 10 %, preferably ≥ 20 % and more preferably ≥ 30 % of the entire volume of the insulator spacer. Further preferably, the core structure has a volume corresponding to ≤ 90 %, preferably ≤ 80 % and more preferably ≤ 70 % of the entire volume of the insulator spacer.

With regard to a thickness of the core structure and/or the shell structure different thicknesses are possible. For example, the shell structure can have a low or very low thickness. In this regard and according to a further preferred embodiment of the invention, an insulator spacer is provided, wherein the shell structure has a thickness ≤ 2 mm, preferably ≤ 1 mm. Preferably the thickness of the shell structure is ≥ 0,1 mm and ≤ 2 mm. Particular preferably, a low thickness of the shell structure is accompanied with a high thickness of the core structure. In this regard the core structure preferably has a thickness ≥ 6 mm, more preferably ≥ 8 mm. Preferably the thickness of the core structure is ≥ 6 mm and ≤ 50 mm.

Different thicknesses of the core structure and the shell structure as described above are however also possible: For example, the shell structure and the core structure can both have an intermediate thickness. In this regard and according to a further preferred embodiment an insulator spacer is provided, wherein the core structure has a thickness ≥ 2 mm, more preferably ≥ 3 mm and/or wherein the core structure has a thickness ≤ 10 mm, more preferably ≤ 8 mm. Particular preferably, an intermediate thickness of the core structure is accompanied with an intermediate thickness of the shell structure. In this regard the shell structure preferably has a thickness ≥ 1 mm, more preferably ≥ 2 mm, and/or wherein the shell structure has a thickness ≤ 8 mm, more preferably ≤ 6 mm.

Further preferably it is possible that the core structure has a low or very low thickness. In this regard and according to a further preferred embodiment of the invention, an insulator spacer is provided, wherein the core structure has a thickness ≤ 2 mm, preferably ≤ 1 mm. Preferably the thickness of the core structure is ≥ 0,1 mm and ≤ 2 mm. Particular preferably, a low thickness of the core structure is accompanied with a high thickness of the shell structure. In this regard the shell structure preferably has a thickness ≥ 6 mm, more preferably ≥ 8 mm. Preferably the thickness of the shell structure is ≥ 6 mm and ≤ 30 mm.

Further preferably the thickness of the shell structure does not vary across different points of the core structure for more than 60 %, more preferably for more than 40 % and even more preferably for more than 20 %. In other words, the thickness of the shell structure is preferably essentially equal for the whole insulator spacer. This is particularly preferred in cases where the shell structure has a low thickness ≥ 0,1 mm and ≤ 2 mm. In this case the core structure has a shape that essentially corresponds to the shape of the entire insulator spacer, meaning that the core structure is essentially in its shape a demagnified version of the insulator spacer. In this embodiment the shell structure preferably forms an outer shell of the insulator spacer without essentially changing the shape of the insulator spacer for example in order to provide a low surface roughness and/or a good dielectric performance.

According to another preferred embodiment, the thickness of the shell structure varies across different points of the core structure for more than 60 %, more preferably for more than 100 % and even more preferably for more than 150 %. In other words, the thickness of the shell structure is preferably not essentially equal for the whole insulator spacer. Hence, structural elements can be formed by the shell structure, for example ribs, rims and/or grooves. This is particularly preferred in cases where the shell structure has a thickness ≥ 2 mm and preferably ≥ 5 mm and/or the core structure has a thickness ≤ 8 mm, preferably ≤ 5 mm. In this case the core structure preferably does not have a shape that essentially corresponds to the shape of the entire insulator spacer.

With regard to the shape of the insulator spacer, the insulator spacer is preferably rotationally symmetric around an axis of revolution and comprises a first circular face and a second circular face, wherein the first face and the second face are opposite to each other. Further preferably the insulator spacer comprises a central opening. Further preferably the insulator spacer comprises a rim around the central opening, also called inner rim.

Further preferably the insulator spacer comprises a reinforcement rib, and preferably a plurality of reinforcement ribs. The ribs may increase the mechanical stability of the insulator spacer. The ribs can be configured to have different arrangement/patterns. Preferably the ribs extend at least partially in a radial direction. For example, a rib starts at the inner rim and extends radially outwards and ends at an outer rim of the insulator spacer. Preferably, the ribs are distributed with equal distance around the rim of the central opening.

Further preferably, the insulator spacer comprises a sealing groove, preferably for sealing a connection of the insulator spacer with an enclosure of the high or medium voltage device. Further preferably the first face and second face are connected to each other by at least one lateral face. Preferably, the sealing groove is not arranged within the lateral face. Instead, the sealing groove is preferably arranged in the first and/or second face. Further preferably the first face and the second face of the insulator spacer each comprise a sealing groove.

Preferably the core structure has essentially the shape of the entire insulator spacer. Preferably the insulator spacer comprises the first face and opposite to the first face the second face, the sealing groove, the rib and/or the inner rim. Further preferably the insulator spacer comprises all of these features. In this regard and according to another preferred embodiment the core structure comprises a disc shaped circular body with a first face and opposite to the first face a second face, a groove, a rib and/or an inner rim. Preferably the core structure comprises all of these features. Preferably the inner rim is symmetrically arranged with regard to the circular body. The thickness of the disc shaped body of the core structure is preferably ≥ 5 mm and/or ≤ 50 mm. This shape of the core structure is particularly preferred in cases where the thickness of the shell structure does not vary across different points of the core structure for more than 60% preferably for more than 40 % and even more preferably for more than 20 % and/or the shell structure has a thickness ≥ 0,1 mm and ≤ 2 mm.

Further preferably the core structure comprises the disc shaped circular body with the first face and opposite to the first face the second face, and an inner rim, however the core structure is preferably free of a groove and/or free of a rib. In other words, the core structure does preferably not correspond to the shape of the insulator spacer. The thickness of the disc shaped body is preferably ≥ 1 mm and/or ≤ 20 mm.

According to another preferred embodiment the core structure comprises the disc shaped circular body with the first face and opposite to the first face the second face, however instead of an inner rim, the core structure comprises an inner bulge. Further preferably the core structure is free of a sealing groove and/or free of a rib. The thickness of the disc shaped body is preferably ≥ 1 mm and/or ≤ 20 mm.

According to another preferred embodiment the core structure comprises the disc shaped circular body with the first face and opposite to the first face the second face, is free of an inner rim, free of an inner bulge, free of a sealing groove and/or free of a rib. The thickness of the disc shaped body is preferably ≥ 0,1 mm and/or ≤ 20 mm. Further preferably a central opening of the core structure has the same diameter as the central opening of the insulator spacer. Alternatively, the central opening of the core structure has a higher diameter as the central opening of the insulator spacer.

According to another preferred embodiment of the invention, the core structure of the insulator spacer is completely covered by the shell structure and lies within the shell structure. In other words, preferably the entire surface of the insulator spacer is formed exclusively by the shell structure. As in this case the entire surface of the insulator spacer is formed by the second material, the insulator spacer, and the insulator comprising said insulator spacer, has enhanced mechanical and/or electrical properties.

According to another preferred alternative embodiment of the invention, the core structure of the insulator spacer is partly covered by the shell structure, such that the first and the second face of the insulator spacer are exclusively formed by the shell structure and a surface adjacent to the central opening of the insulator spacer is at least partly formed by the core structure. Such an insulator spacer has the advantage that it is less complex to manufacture and thus less expensive.

As already mentioned, the invention is also directed to the insulator for a high or medium voltage device comprising the above-described insulator spacer and a conductive insert arranged in a central opening of the insulator spacer.

Preferably the conductive insert is a metal insert and/or the conductive insert is integrally formed. Preferably the insert is an aluminum insert. Metal, and in particular aluminum, provides sufficient electrical connectivity to the conductor of the high or medium voltage device. Being integrally formed preferably means that the insert is made of one piece. This enhances the stability of the insert and simplifies the production of the insert and/or insulator.

Further preferably the conductive insert corresponds in its form to a body of revolution. Further preferably the insert is arranged in the central opening of the insulator spacer such that the axis of revolution of the insert is parallel to the axis of revolution of the insulator spacer.

According to another preferred embodiment of the invention the core structure lies completely within the insulator. In other words, the outer surface of the insulator is either formed by the shell structure of the insulator spacer or by the insert. This has the advantage that the first material can be chosen to have a high filler content to give high mechanical stability without influencing the gas tightness and/or the dielectric performance negatively, as the second material or the insert forms the outer surface of the insulator. The second material can preferably be chosen to have a low filler content or even no filler at all to have a high surface glossiness and/or a low surface roughness, such that a high gas tightness can be achieved. Such a configuration can be achieved either by having the core structure entirely covered by the shell structure or by having the core structure partly covered by the shell structure, wherein the uncovered regions of the core structure form a boundary surface to the insert. With regard to the second alternative and in other words, preferably an insulator is provided, wherein the core structure has a boundary surface to the insert.

According to another preferred embodiment of the invention the insulator is free of a metal sheet within the insulator spacer. Conventional insulators usually comprise within the insulator spacer a metal sheet, preferably arranged perpendicular to the axis of revolution of the insert, in order to enhance the robustness of the insulator. However, as the insulator spacer comprises the core structure and the shell structure, it is not necessary to incorporate a separate metal sheet into the insulator. Thus, the production of the insulator is simplified.

With regard to the insulator comprising the insulator spacer and the insert, the insulator can be configured as a disc type insulator. Alternatively, the insulator can be configured as a conical type insulator - also called basin type insulator. Further preferably the insulator is configured as barrier insulator. The insulator is particular suited for a gas-insulated high or medium voltage device, in particular for a gas-insulated switchgear. Preferably, the insulator enables that a conductor of the high or medium voltage device is firmly located inside the device, in a position sufficiently far away from a grounded enclosure of the device. The insert of the insulator is preferably configured to provide electrical connection to the conductor of the high or medium voltage device. Furthermore, the volume enclosed by the enclosure of the high or medium voltage device may be divided in several compartments by the insulator.

The insulator spacer of the insulator may be configured to be firmly attached to the enclosure, for example by a flange. In order to prevent leakage of the insulation gas at the connection of the insulator spacer and the enclosure, a sealing mean, such as an O-ring may be provided within the sealing groove of the insulator spacer. The sealing means enable the insulator to keep required pressure between compartments of the gas-insulated high voltage device and to avoid insulation gas leakage to the environment. Hence, the insulator is preferably configured to keep a required pressure between compartments of the gas-insulated high or medium voltage device and to avoid insulation gas leakage to the environment.

Further embodiments and advantages of the insulator are directly and unambiguously derived by the person skilled in the art from the description of the insulator spacer as described before.

Furthermore, and as already mentioned, the invention is also directed to the gas insulated high or medium voltage device comprising the above insulator and an insulation gas. Preferably, the insulation gas comprises CO₂, SF₆, mixtures of SF₆ with a carrier gas and/or mixtures of fluoroketons and/or fluoronitriles with a carrier gas, decafluoro-2-methylbutan-3-one (C5-FK), and/or heptafluoro-2-methylpropanenitrile (C4-FN).

With regard to the high or medium voltage device, the high or medium voltage device of the present invention is preferably configured as switchgear. In the context of this invention medium to high voltages means voltages of 12 kV to 72 kV (medium voltage) and up to 1200 kV (high voltage).

The insulation gas of the high or medium voltage device preferably provides dielectric insulation and/or acts as arc extinction medium in the switchgear. Preferred insulation gases are insulation gases with a reduced fluorine content compared to SF₆, and further preferred are insulation gases that are free of fluorine. The carrier gas for use with fluoroketons and/or fluoronitriles and/or SF₆ may comprise air, N₂, CO₂, and mixtures thereof. Further preferably a pressure of the insulation gas within the high or medium voltage device is at least during circuit breaking operation preferably above atmospheric pressure.

Further embodiments and advantages of the high or medium voltage device are directly and unambiguously derived by the person skilled in the art from the description of the insulator spacer and/or the insulator as described before.

Furthermore, the object is solved by a method for producing an insulator spacer of an insulator for a high or medium voltage device, comprising the step of combining at least a first material comprising a thermoplastic and a second material comprising a thermoplastic into an insulator spacer by multi material injection molding, such that an insulator spacer comprising a core structure consisting of the first material, a shell structure partly covering the core structure and consisting of the second material, and an interface between the core structure and the shell structure is formed.

Further preferably the step of combining at least the first material and the second material into the insulator spacer comprises combining at least the first material and the second material into the insulator spacer during the same molding cycle.

Further preferably the step of combining at least the first material and the second material into the insulator spacer is performed with a multi-shot molding machine and/or an overmolding machine.

Further embodiments and advantages of the method for producing the insulator spacer are directly and unambiguously derived by the person skilled in the art from the description of the insulator spacer as described before.

### Brief description of drawings

These and other aspects of the invention will be apparent from and elucidated with reference to the embodiments described hereinafter.

In the drawings:
- Fig. 1: schematically shows a cutaway drawing of an insulator, according to a preferred first embodiment of the invention,
- Fig. 2: schematically shows a cutaway drawing of an insulator, according to a preferred second embodiment of the invention,
- Fig. 3: schematically shows a cutaway drawing of an insulator, according to a preferred third embodiment of the invention,
- Fig. 4: schematically shows a cutaway drawing of an insulator, according to a preferred fourth embodiment of the invention,
- Fig. 5: schematically shows a cutaway drawing of an insulator, according to a preferred fifth embodiment of the invention, and
- Fig. 6: schematically shows a cutaway drawing of an insulator, according to a preferred sixth embodiment of the invention.

### Description of embodiments

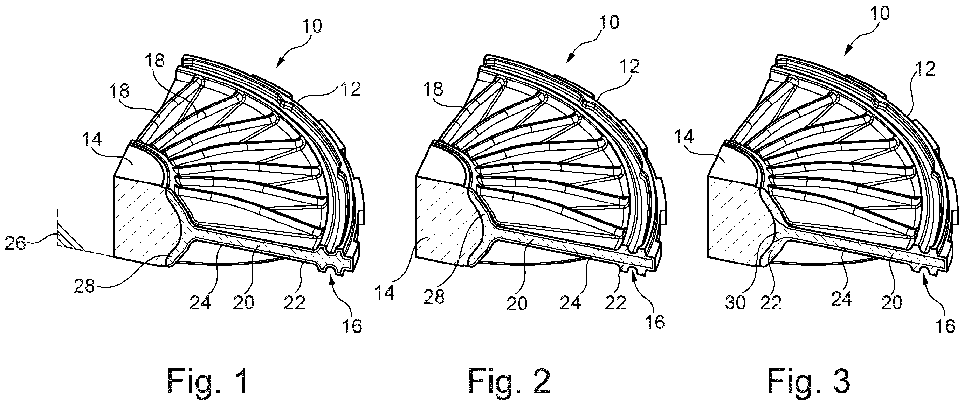

Fig. 1 schematically shows a cutaway drawing of an insulator 10 for a gas-insulated switchgear, according to a preferred first embodiment of the invention. The insulator 10 comprises an insulator spacer 12 and a conductive insert 14 arranged in a central opening of the insulator spacer 12. The insulator 10, as well as the insulator spacer 12 and the insert 14, have a rotationally symmetric form, however figure 1 only shows a quarter of the circular form of the insulator 10, in order to show the inner structure of the insulator spacer 12. The conductive insert 14 - in this embodiment an aluminium insert 14 - is arranged in the central opening of the insulator spacer 12.

The insulator spacer 12 has a disc shaped form with a first face and opposite to the first face a second face and comprises near an outer edge of the insulator spacer 12 a sealing groove 16. When the insulator 10 is assembled in the switchgear, an O-Ring is arranged in the sealing groove 16 for a gas tight sealing of a connection of the insulator spacer 12 with an enclosure of the switchgear. The insulator spacer 12 further comprises a plurality of ribs 18 extending in a radial direction from an inner rim around the central opening towards the outer edge.

With regard to the inner structure of the insulator 10, figure 1 shows that the insulator spacer 12 comprises a core structure 20 and a shell structure 22. The core structure 20 is at least partly covered by the shell structure 22. Furthermore, at the regions where the shell structure 22 covers the core structure 20 an interface 24 is formed. In this particular embodiment the interface 24 has a width about 1 mm and can be recognized by visual inspection of a cutting surface 26 of the insulator spacer 12, as thin dark line.

The core structure 20 consists of a first material - in the following called core material - comprising a thermoplastic. The shell structure 22 consists of a second material - in the following called shell material - also comprising a thermoplastic. In the embodiment shown in figure 1 the core material consists of a mixture of PESU and 30 vol-% glass fibers and the shell material consists of PESU. Furthermore, for the core material and the shell material the same grade of PESU is used.

Furthermore, as can be seen in figure 1, the core structure 20 has a shape that nearly corresponds to the outer shape of the insulator spacer 12. In other words, the shape of the core structure 20 mimics the outer shape of the insulator spacer 12, as can for example best be seen near the sealing groove 16, where the core structure 20 also comprises a groove. Furthermore, the core structure 20 comprises in this embodiment a disc shaped circular body with a first face and opposite to the first face a second face. Furthermore, the core structure 20 also comprises at the positions of the ribs 18 of the insulator spacer 12 a rib (not seen in figure 1 as it is covered by the shell structure 22). Furthermore, the core structure 20 comprises at the position of the inner rim of the insulator spacer also an inner rim 28. The inner rim 28 is symmetrically arranged with regard to the circular body. Furthermore, in the embodiment shown in figure 1, the shell structure 22 has a rather low thickness, about 2 mm and the thickness of the shell structure 22 does not vary across different points of the core structure 20 for more than 50 %. The thickness of the disc shaped body of the core structure 22 is about 8 mm (the thickness is not determined at a position of the ribs, the groove, or the inner rim 28, but across the first and second face of the disc shaped body). The shell structure 22 partly covers the core structure 20, such that the uncovered regions of the core structure 22 - i.e. regions of the inner rim 28 - form a boundary surface to the insert 14. Hence, the outer surface of the insulator 10 is formed by the shell structure 22 or the insert 14.

The embodiment of the insulator 10 shown in figure 1 is manufactured by multi-material injection molding, wherein the core material and the shell material are injected into a mold form during the same molding cycle in order to form the core structure 20 and the shell structure 22 of the insulator spacer 12.

With regard to the further embodiments of the insulator 10 shown in figures 2 to 6, the insulator 10 basically has the same shape as in the first embodiment of the insulator 10 shown in figure 1, meaning that the outer shape of the insulator 10 in the embodiments in figures 2 to 6 is the same as in figure 1. Furthermore, also all the embodiments of figures 2 to 6 have with regard to the inner structure of the insulator spacer 12, a core structure 20 consisting of a core material, a shell structure 22 consisting of a shell material, and an interface 24. Also, for all embodiments in figures 2 to 6 the shell structure 22 at least partly covers the core structure 20 of the insulator spacer 12. The embodiments of the insulator 10 in figures 2 to 6 are also manufactured by multi-material injection molding. In the following only the differences of each embodiments will be described in detail.

In the embodiment shown in figure 2, the core material consists of a mixture of PESU and 50 vol-% glass fibers, and the shell material consists of a mixture of PESU and 20 vol-% glass fibers. Also, the same grade of PESU is used. However, compared to the embodiment in figure 1, the core structure 20 is in its shape less close to the outer shape of the insulator spacer 12. The core structure 20 comprises also in this embodiment a disc shaped circular body with the first face and opposite to the first face the second face. Furthermore, the core structure 20 also comprises at the positions of the ribs 18 of the insulator spacer 12 a rib (not seen in figure 2 as it is covered by the shell structure 22). Furthermore, the core structure 20 also comprises the inner rim 28. However, at the position of the sealing groove 16 of the insulator spacer 12, the core structure 20 is free of the sealing groove. Furthermore, the shell structure 22 partly covers the core structure 20, such that the uncovered regions of the core structure 22 - i.e. the regions at the inner rim 28 - form a boundary surface to the insert 14. Furthermore, the core structure 20 has a thickness of about 8 mm (the thickness is not determined at a position of the ribs, or the inner rim 28, but across the first and second face of the disc shaped body), and the shell structure 22 has a thickness of about 2 mm (the thickness is not determined at a position of the ribs, the groove, or the inner rim 28, but at the position of the disc shaped body). However, as the shell structure 22 is responsible for providing the sealing groove 16 as structural element, the thickness of the shell structure 22 varies across different points of the core structure 20 with more than 100%.

In the embodiment shown in figure 3, the core material consists of a mixture of PBT and 60 vol-% glass fibers, and the shell material consists of a mixture of PBT and 5 vol-% glass fibers. Furthermore, the same grade of PBT is used. Furthermore, the shell structure 22 partly covers the core structure 20, such that the uncovered regions of the core structure 22 form a boundary surface to the insert 14. However, compared to the embodiments in figures 1 and 2, the core structure 20 is in its shape even less close to the outer shape of the insulator spacer 12 and resembles a circular disc. Instead of the inner rim 28 the core structure 20 comprises an inner bulge 30. In other words, the core structure 20 does not only not mimic the shape of the insulator 10 near the sealing groove 16, but also differs strongly form the outer shape of the insulator spacer 12 at the boundary surface of the core structure 20 to the insert 14. Furthermore, the core structure in this embodiment is free of a groove at the position of the sealing groove 16 of the insulator spacer 12, and free of a rib at positions of the rib 18 of the insulator spacer. Furthermore, the core structure 20 has a thickness of 6 mm (the thickness is not determined at a position of the bulge 30, but across the first and second face of the disc shaped body). Furthermore, the shell structure 22 has a thickness of about 3 mm (the thickness is not determined at a position of the ribs, the groove, or the bulge 30, but across the first and second face of the disc shaped body). As the shell structure 22 is responsible for providing the sealing groove 16 and the ribs 18 as structural elements, the thickness of the shell structure 22 varies across different points of the core structure 20 with more than 150%. As can be seen in the embodiment shown in figure 3, at the region directly around the top and bottom of the conductive insert 14, the insulator spacer 12 does not comprise two layers, but the inner structure of the insulator spacer 12 resembles a spacer that was manufactured by classical injection molding. The multi-material injection molding is however evident at the region of the disc of the insulator spacer 12.

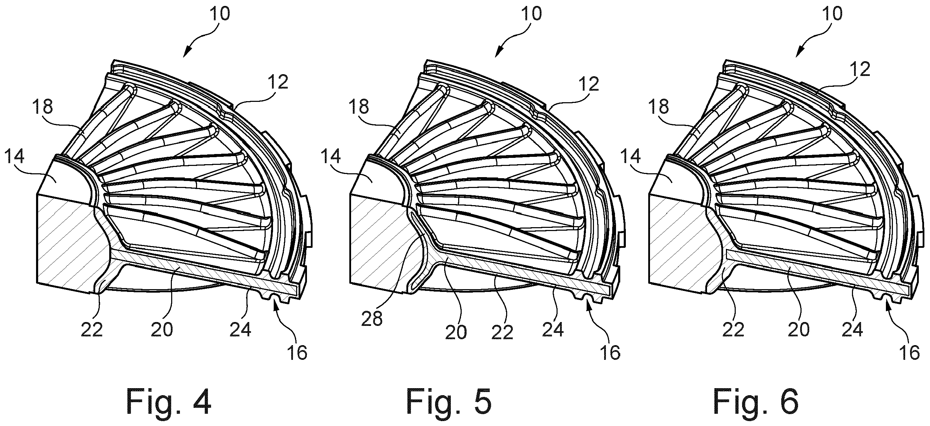

In the embodiment shown in figure 4, the core material consists of PPS and 30 vol-% glass fibers and the shell material consists of PPS. Furthermore, the same grade of PPS is used. Furthermore, the shell structure 22 partly covers the core structure 20, such that the uncovered regions of the core structure 22 form a boundary surface to the insert 14. However, compared to the embodiments in figures 1, 2, and 3 the core structure 20 is in its shape even less close to the outer shape of the insulator spacer 12. The core structure 20 in this embodiment is just the disc shaped circular body with the first face and opposite to the first face the second face. The core structure 20 is free of the inner rim 28, free of the inner bulge 30, free of the rib and free of the groove. Furthermore, the core structure 20 has a thickness about 8 mm, and the shell structure 22 has a thickness about 2 mm (the thickness is not determined at a position of the ribs 18, the sealing groove 16, or the inner rim, but across the first and second face of the disc shaped body). Furthermore, as the shell structure 22 is responsible for providing the sealing groove 16, the ribs 18 and the inner rim as structural elements, the thickness of the shell structure 22 varies across different points of the core structure 20 with more than 150%.

In the embodiments shown in figures 1 to 4, as the core structure 20 is adjacent to the insert 14, a diameter of the central opening of the core structure 20 is equal to the diameter of the central opening of the insulator spacer 12.

In the embodiment shown in figure 5, the core material consists of PESU and 60 vol-% glass fibers, and the shell material consists of PESU and 3 vol-% glass fibers. Also, the same grade of PESU is used. Furthermore, comparable to the embodiment shown in figure 2, the core structure 20 comprises also in this embodiment a disc shaped circular body with the first face and opposite to the first face the second face. Furthermore, the core structure 20 also comprises the inner rim 28 and is free of a groove at positions of the sealing groove 16 of the insulator spacer12. However, at positions of the ribs 18 the core structure 20 of the insulator spacer 12 is free of a rib. Furthermore, the inner rim 28 does not form a boundary surface to the insert 14. Instead, the core structure 20 is completely covered by the shell structure 22. In this embodiment, the core structure 20 has a thickness of about 9 mm (not determined at the inner rim 28, but across the disc shaped body), and the shell structure 22 has a thickness about 3 mm (the thickness is not determined at a position of the ribs 18, the sealing groove 16, or the inner rim, but across the first and second face of the disc shaped body). Furthermore, as the shell structure 22 is responsible for providing the sealing groove 16, and the ribs 18 as structural elements, the thickness of the shell structure 22 varies across different points of the core structure 20 with more than 150%.

With regard to the embodiment shown in figure 6, the insulator 10 also comprises the insulator spacer 12, having the core structure 20 and the shell structure 22. Furthermore, in the embodiment in figure 6, the core material and the shell material are the same. Both materials are PESU and 30 vol-% glass fibers. Even though the core material and the shell material are the same, the insulator spacer 12 still comprises the interface 24, visible as thin dark line. With regard to the shape of the core structure 20, the core structure 20 comprises the disc shaped circular body with the first face and opposite to the first face the second face. However, comparable to the embodiment in figure 4, the core structure 20 is free of the inner rim, free of the inner bulge, free of the groove and free of the rib. Furthermore, comparable to the embodiment shown in figure 5 the core structure 20 in figure 6 is entirely covered by the shell structure 22, such that the core structure 20 has no boundary surface to the insert 14. Furthermore, in this embodiment, the core structure 20 has a thickness about 8 mm (determined across the disc shaped body), and the shell structure 22 has a thickness about 2 mm except at areas near the inner rim around the conductive insert 14, near the sealing groove 16 or near ribs 18. Furthermore, as the shell structure 22 is responsible for providing the sealing groove 16, the inner rim and the ribs 18 as structural elements, the thickness of the shell structure 22 varies across different points of the core structure 20 with more than 150%.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosed, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 10: insulator
- 12: insulator spacer
- 14: conductive insert, aluminium insert
- 16: sealing groove
- 18: rib
- 20: core structure
- 22: shell structure
- 24: interface
- 26: cutting surface
- 28: inner rim of core structure
- 30: inner bulge of core structure

## Claims

1. Insulator spacer (12) for an insulator (10) of a high or medium voltage device, wherein the insulator spacer (12) comprises a core structure (20) and a shell structure (22), wherein the core structure (20) is at least partly covered by the shell structure (22), wherein the core structure (20) consists of a first material comprising a thermoplastic, and wherein the shell structure (22) consists of a second material comprising a thermoplastic, and wherein an interface (24) is formed between the core structure (20) and the shell structure (22).

2. The insulator spacer (12) according to the preceding claim, wherein the insulator spacer (12) is produced by multi-material injection molding, preferably by multi-shot injection molding, multi component injection molding, and/or overmolding.

3. The insulator spacer (12) according to any of the preceding claims, wherein the first material and/or the second material are free of a thermoset epoxy.

4. The insulator spacer (12) according to the any of the preceding claims, wherein the first material is different to the second material, or wherein the first material and the second material are the same.

5. The insulator spacer (12) according to any of the preceding claims, wherein the first material and/or the second material comprise in addition to the thermoplastic a filler, preferably a fiber.

6. The insulator spacer (12) according to the preceding claim, wherein the filler is selected from silica, carbon, mica, calcium carbonate, kaolin, talc, wollastonite, glass, glass fibers, aramid fibers, carbon fibers, polyethylene fibers and/or basalt fibers.

7. The insulator spacer (12) according to any of the preceding claims, wherein a filler content of the first material is higher than a filler content of the second material.

8. The insulator spacer (12) according to any of the preceding claims, wherein a filler content of the first material is > 0 vol%, more preferably ≥ 10 vol%, even more preferably ≥ 20 vol%, and/or wherein a filler content of the first material is ≤ 70 vol%, more preferably ≤ 60 vol%, even more preferably ≤ 50 vol%, and/or wherein a filler content of the second material is ≤ 30 vol%, more preferably ≤ 20 vol%, even more preferably ≤ 10 vol% and/or wherein the second material is free of a filler.

9. The insulator spacer (12) according to any of the preceding claims, wherein a repeat unit of the thermoplastic of the first material is the same as the repeat unit of the thermoplastic of the second material.

10. The insulator spacer (12) according to any of the preceding claims, wherein the insulator spacer (12) comprises a structural element and wherein the structural element has a thickness ≥ 6 mm, preferably ≥ 12 mm, and even more preferably ≥ 18 mm.

11. The insulator spacer (12) according to any of the preceding claims, wherein
a) the shell structure (22) has a thickness ≥ 0,1 mm and ≤ 2 mm, and/or wherein a thickness of the shell structure (22) does not vary across different points of the core structure (20) for more than 60 %; or
b) the shell structure (22) has a thickness ≥ 1 mm and ≤ 6 mm, or ≥ 6 mm and ≤ 30 mm, and/or wherein a thickness of the shell structure (22) varies across different points of the core structure (20) for more than 60 %; or
c) the core structure (22) has a thickness ≥ 0,1 mm and ≤ 2 mm, or ≥ 2 mm and ≤ 8 mm, and/or wherein the core structure (22) does not correspond in its shape to an outer shape of the insulator spacer (12); or
d) the core structure (22) has a thickness ≥ 6 mm and ≤ 50 mm, and/or wherein the core structure (22) corresponds in its shape to an outer shape of the insulator spacer (12).

12. Insulator (10) for a high or medium voltage device comprising an insulator spacer (12) according to any of the previous claims and a conductive insert (14) arranged in a central opening of the insulator spacer (12).

13. The insulator (10) according to the previous claim, wherein the core structure (20) lies completely within the insulator (10) and/or wherein the core structure (20) has a boundary surface to the insert (14).

14. Gas insulated high or medium voltage device comprising an insulator (10) according to any of claims 12 to 13 and an insulation gas.

15. Method for producing an insulator spacer (12) of an insulator (10) for a high or medium voltage device, comprising the step of
combining at least a first material comprising a thermoplastic and a second material comprising a thermoplastic into an insulator spacer (12) by multi-material injection molding, such that
an insulator spacer (12) comprising a core structure (20) consisting of the first material, a shell structure (22) partly covering the core structure (20) and consisting of the second material, and an interface (24) between the core structure (20) and the shell structure (22) is formed.
